# EUROPEAN PATENT SPECIFICATION

(11) **EP 1 769 688 B1**
(45) Date of publication and mention of the grant of the patent: **09.01.2008**
(21) Application number: 06120409.5
(22) Date of filing: 11.09.2006
(51) Int. Cl.: A23L 1/317, A23P 1/16, A23L 1/00

(54) **Spreadable meat product**
Streichfähiges Fleischprodukt
Produit à tartiner à base de viande

(30) Priority: 30.09.2005 EP 05077230
(43) Date of publication of application: 04.04.2007
(73) Proprietor: UNILEVER N.V., 3013 AL Rotterdam (NL); UNILEVER PLC, London EC4P 4BQ (GB)
(72) Inventor: Fritsche, Jan, 91522, Ansbach (DE); Fritsche, Sonja, 20355 Hamburg (DE); Lubig, Wolfgang, 91522, Ansbach (DE); Ostheimer, Werner, Stefan, 87480 Weitnau (DE); Reil, Stefan, Dieter, 91522, Ansbach (DE); Zitterbart, Matthias, Stefan, 91522, Ansbach (DE)
(74) Representative: Joppe, Hermina Laura Petronella

(56) References cited:
- US-A- 5 413 802
- US-A- 5 620 736
- US-B1- 6 468 578

## Description

The present invention relates to a patterned spread comprising at least a first phase and at least a second phase, wherein the first phase comprises meat and the second phase is essentially meat free. The present invention also relates to a process for the manufacture of the first phase and a process for the manufacture of a second phase. Furthermore the present invention relates to a process for the manufacturing of a patterned spread.

Traditional spreadable meat products like liverwurst and paté, are products with one continuous composition. The composition is usually made from chopped meat and liver which are mixed and then cooked. Consumers have often used these liversausage as spreads for bread and the like. Varieties of these spreadable liversausage products are available, with extra ingredients such as herbs, nuts, berries, and pieces of cheese. The extra ingredients are homogeneously mixed through the liver sausage and the new varieties have one continuous composition. When one takes a sufficiently large sample from a part of the product, it has the same composition as a sample taken from another part of the products and when making cross-sections through the product only one homogenous phase is visible, e.g. just one phase or the second phase is evenly distributed in the first phase, e.g. distinguishable pieces in a paté phase.

Products are known that have a patterned composition.
Patterned compositions are compositions which have heterogeneous properties, e.g. have patterns like stripes, swirls, layers or spots. These kind of products are often for consumer optically more pleasing then non-patterned products.

Well known examples of such products are striped ice cream confections, however also patterned spreads are known.

DE 203 14 432 discloses a stable two or more phase spread with at least one phase of a water continuous spread on milk basis and a separate phase which preferably comprises taste additives, colorants and other additives, whereby the molar concentration respectively the compound concentration of the ingredients with osmotic activity is similar for the two phases.

WO00/64268 discloses food products comprising a water in oil emulsion and a variegate composition and from 15 to 85 vol% of a gas. The variegate composition is based on vegetable bases or fruit bases. The variegate composition differs from the water in oil composition in texture, and/or colour.

However, a stable patterned spread comprising a meat phase and a non-meat phase is up to now not known. When e.g. liversausage is brought into close contact with cream cheese at usual pasteurisation temperatures serious defects are observed in the final product such as, breaking of the emulsions, oil and water separation, and colour movement from one phase to the other. However, the heating step is necessary to obtain an acceptable microbiological stability.

An object of the invention is to provide a meat spread, that is suitable for spreading on bread, toast and the like. Another object of the invention is to provide a meat spread combined with another phase. Yet another object of the invention is to provide a meat spread that doesn't show breaking of the emulsions. Furthermore an object of the invention is to provide a meat spread without oil and water separation and/or colour movement. An additional object of the invention is to provide a meat spread that has a microbiological stability.

One or more of the above mentioned objects is attained by a patterned spread comprising at least a first phase and at least a second phase, wherein the first phase comprises meat and the second phase is essentially meat free wherein the first phase comprises 10 to 90 wt% of meat, 0 to 30 wt% of bacon, 5 to 50 wt% of liver, 1 to 5 wt% of added protein, having a pH of 4.0 to 7.5.

### Detailed description

For the purpose of the present invention a patterned product has more than one phase wherein the phases are inhomogeneously mixed, and wherein at least one phase has a colour, texture or taste different from another phase with which it is inhomogeneously mixed.

"Inhomogeneously mixed" indicates that regions, e.g. having a size of at least about 5 mm³, with different composition and texture can be identified in the pack.

A spread is a product that can be applied on for example bread with a knife without tearing the bread and forming a nice and homogenous layer on the bread. Examples of spreadable products are margarine, peanut butter, chocolate paste, syrup, honey and liver paté.

Throughout this specification all parts, proportions and percentages are expressed by weight except where indicated otherwise.

The patterned meat products of the present invention are different from the known spreadable meat products described above in that when a cross-section is made, more than one phase is present. Moreover, when a sample is taken from a first phase of the product of the invention the composition of this first phase is different from a sample from a second phase.

The phases of the patterned product of the present invention are combined in a package, indicating that the first phase and the second phase are in contact with each other. Thus the phases are not contained in separate compartments of the pack.

The first phase comprises meat. The meat may be from any animal source such as pork, beef, poultry, lamb, or fish, or crustaceans like crab and shrimps. For the purpose of the invention, meat also comprises meat substitutes such as soy-based meat substitutes like tofu and tempeh or fungus based substitutes like Quorn, or whey-protein based meat-substitutes. The first phase preferably comprises bacon. Bacon is fatty tissue from the side, belly, or back of a pig. For the purpose of the invention bacon also comprises bacon substitutes. A suitable bacon substitute is an edible fat or oil or mixtures thereof. The fat or oil(s) might be hardened, non-hardened or transesterified in order to structure the meat phase. The edible fat or oil has to have a comparable melting point to bacon. Both animal and vegetable fats or oils may be suitable.

Furthermore the first phase also comprises liver. The first phase is a meat product which is not unlike a spreadable liversausage or paté. The liver may be from pig, beef, avian, or lamb origin.

The first phase comprises added proteins. For the purpose of the invention added proteins means that protein are present in addition to the proteins coming from the meat bacon and liver. Suitable proteins are milk proteins such as whey, caseinate, milk proteins from skimmed milk powder, butter milk powder or lactose free milk powder or mixtures thereof. Preferred protein is whey protein.

The amount of added protein is between 1 and 5 wt% on first phase. Preferably the amount of added protein is between 1 and 3 wt% on product. Another preferred amount of added protein is between 2 and 4 wt% on product.

The pH of the first phase is between 4.5 and 7. Preferably the pH is between 4.5-5.9.

Preferably the spread of the present invention comprises a first phase comprising tocopherols. Preferably the amount of tocopherol is between 0.001 and 1 wt%, more preferably between 0.1 and 1 wt%.

The tocopherol may be a mixture of different tocopherols such as alpha-, gamma-, and delta tocopherol. Additionally, the tocopherol may be a single tocopherol e.g. alpha-tocopherol or delta-tocopherol.

The second phase is essentially free of meat. Essentially free of meat means for the purpose of the invention that no meat is used in the preparation of the second phase. The second phase may however comprise ingredients from animal origin like fat, protein, and/or gelatin.

The second phase may comprise cheese, fresh cheese, creme fraiche, yoghurt, cream cheese, dairy cream, dairy spread, dairy cream alternative, dairy spread alternative, soy, honey, chocolate, ice cream, yoghurt, herbs, spices, vegetables, fruit, berries, nuts, and combinations thereof.

Preferred second phases are, cheese, and water-continuous products such as cream cheese, dairy cream or a non-dairy cream, also called dairy cream alternative.

For the purpose of the invention, a non-dairy cream or non-dairy spread has the taste, texture and functionality of a dairy cream or dairy spread wherein at least a part of the dairy fat and/or protein has been replaced by vegetable and/or marine oil and/or protein. A dairy spread is any spread made from milk, buttermilk, whey, cream and/or reconstituted milk, buttermilk, cream or whey, with or without fermentation, with or without additional stabilisers such as viscosifiers, gelifiers and/or additional milk proteins.

Another preferred second phase are phases with herbs or vegetables, such as green and red pesto.

In addition, the water activity as well as the hot and cold phase consistency of the fresh cream phase is preferably adapted to the meat phase environment in order to achieve optimal phase integrity.

The first and second phase suitably have comparable viscosity at filling temperature to ensure dosing accuracy and optimum line speed and to prevent unintended mixing of the phases if they are too liquid. If filling is done at typical pasteurisation temperatures a very suitable viscosity is about 1 Pa*s for both the first phase and the second phase.

The desired viscosity of the dairy phase can be achieved by optimising the amounts and ratios of viscosifiers and gelifiers.

The firmness of the different phases at usage temperatures (0-30 °C) is preferably comparable as well to guarantee optimum spreadability. The phases are preferably firm enough to prevent unintended mixing and they are soft enough to allow easy spreading on bread.

The firmness (Stevens value) can be determined e.g. with a Texture Profile Analyser. Preferred firmness values lie between 25 and 500 Stevens (measured with a 12.7 mm probe at 5°C).

The desired firmness can be achieved by optimising the amounts and ratios of viscosifiers and gelifiers. The optimum amount depends on the dry matter content of this phase as well as on the amount of solid fat.

If two different phases are brought into close contact to each other it can happen that components of one phase are leaking into the other phase. This is not desired because it could for example lead to discoloration of one of the phases if for example natural or added colours from vegetables, herbs, spices or fruits are leaking into the meat phase. Another undesired effect is the increase in firmness difference if water is leaking from one phase to the other.

By matching the water activity of the different phases this leaking may be prevented. Suitably the difference between the water activity (Aw) between the first phase and second phase is less than 0.2, more preferably less than 0.1.

To match the water activity one may adjust the concentrations of protons (represented by the pH-value), mineral ions (mainly the salt content) and other water soluble components with osmotic properties (such as sugars and organic acids).

Preferably also the pH from the different phases do not differ too much. Preferably the difference between the pH from the first phase and the pH from the second phase is less than 2, more preferably less than 1.

It is preferred for the first phase and the second phase to be different in colour such that it is perceivable with the naked eye. Thus the product preferably has at least 2 regions in the pack with perceivably different colours. For example, the first phase can be liversausage- or paté colour, while the second phase can be white when it is a dairy cream or non-dairy cream or red or green when using a herbal, vegetable or fruit phase.

An embodiment of the present invention relates to a process for the manufacture of the first phase suitable for a patterned spread according to the invention comprising the steps of
a) mixing meat with bacon or bacon substitute
b) heating to a temperature of at least 70°C for at least 2 minutes
c) adding liver
d) cooling
e) heating to a temperature of at least 70°C for at least 5 minutes
f) micro-emulsifying
wherein protein is added.

The meat and bacon or bacon substitute are cut into small pieces of 0.01 - 1.0 mm either before or after the mixing of the meat and bacon.

Preferably the liver is added after the first heating step. Most preferred the steps of process are performed in the order of first a), then b), then c), then d), then e), and finally f).

Optionally, an emulsifier is added to the cut bacon and meat mixture. During the process, an emulsifier may also be added during other steps, such as before grinding of the meat.

Suitable emulsifiers are monoglycerides, diglycerides, citric or lactic acid esters of mono- or diglycerides, lecithin.

The liver is added to the meat and bacon in pieces of 10-60 cm and the resulting mixture is mixed.

Preferably the liver is added while being frozen so that the mixture is cooled by the addition of the frozen liver.

After the heating step the mixture is cooled to a temperature below 65°C, preferably below 60°C. Suitably the mixture is not cooled below 10°C.

The micro-emulsifying step may be performed by means of a micro-cut apparatus. The micro-emulsifying step has the result that the mouthfeel of the meat phase is optimised.

Protein is added during the process, it may be added after the cooling step or the second heating step e).

The protein may be from any source such as milk, butter milk, it may in the form of a powder, such as whey powder, skimmed milk powder, buttermilk powder, lactose free milk powder, caseinate. Preferably the milk protein is whey protein.

The protein is added in an amount 1 to 5 wt% on product, preferably in an amount of 1 to 4 wt%, more preferably in an amount of 1 to 3 wt%.

In a preferred embodiment, tocopherol is added during the process of the present invention. Preferably it is added to the meat and bacon mixture, before step b). The tocopherol may also be added after cooling step d). Suitable amounts of tocopherol may be between 0.001 and 1 wt% or even between 0.1 and 1 wt%.

Particular good products are obtained when the first phase is acidified. The acidification may be before the addition of the liver, before step c). Also the acidification may be before the first heating step b).

Acidification is suitably done by a food grade acid, such as citric acid, lactic acid, acetic acid.

The amount of acidification is preferably such that the resulting pH of the first phase is between 4.5 and 7.0.

A further embodiment of the present invention relates to a process for the manufacture of a second phase suitable for a patterned spread according to the invention wherein the second phase is a dairy or dairy-alternative phase comprising mixing a water continuous emulsions, comprising 3 to 60 wt% fat, 3 to 17 wt% of protein, and a Stevens value at 5°C of between 25 and 500 g and a pH of 4.4 to 5.6
a) optionally adding thickener in an amount of between 0.05 to 2.5 wt% on total second phase and heating to a temperature of at least 72°C for at least 30 seconds
b) homogenising or mixing

The addition of thickener may be avoided if the dry matter is at least 28 wt%. The heating step is only needed when thickener is added.

The heating is preferably done at a temperature of less than 95 °C. Preferably the heating lasts less than 5 minutes.

A dairy alternative for the purpose of the present invention is a dairy product wherein at least a part of the dairy fat and/or protein is replaced by a vegetable fat and/or protein.

The water continuous emulsion may be a fresh cheese type of product, yoghurt, or a creme fraiche or a chemically acidified cream or a combination thereof.

Suitable thickeners are viscosifiers such as locust bean gum, gum arabicum, tara gum, starch, and/or gelifiers such as pectins, xanthan, gelatin, carrageenan.
Thickeners are added in an amount of between 0.05 and 2.5 wt% on second phase, preferably between 0.1 and 0.7 wt%.

In addition, other ingredients may be added to the diary or dairy-alternative second phase, such as salt, spices, herbs, nuts, fruits, vegetables, chocolate, flavours, aromatic compounds and colouring agents.

In a preferred embodiment there is provided a process for the manufacture of a second phase suitable for a patterned spread according to the invention wherein the second phase is a phase comprising pesto.

The pesto may be the normal green pesto made from basil leaves. It may also be red pesto made from sun-dried tomatoes or a pesto made from any other suitable vegetable such as spinach. The pesto may be made by any process known to the skilled person. Preferred are pestos that consist of herbs and/or vegetables, dispersed in water and stabilised by thickeners with or without the addition of oils and/or fats.

Another embodiment of the present invention provides for a process for the manufacture of a patterned spread according to the invention comprising filling the first and second phase at a temperature of between 65 and 80°C preferably under an inert atmosphere.

The inert atmosphere is a atmosphere without oxygen. Suitable inert atmosphere is nitrogen gas.

To obtain good keepability and prevent microbiological problems from occurring, preferably the first phase and the second phase are filled at a temperature of at least 72 °C, more preferably at least 75°C.

On the other hand, the temperature should preferably not be too high. Else the components may become too thin and obtain an insufficient filling viscosity. Furthermore more mixing may occur during filling between the components than is desirable. Therefore, the temperature at which the first and second phase are filled is preferably not higher than 95°C, more preferably it is not higher than 85°C.

Alternatively the first and second phase may be filled at a temperature of between 25 and 40°C under aseptic conditions.

Preferably a single nozzle construction is used comprising a filling mouth through which the first phase is moved forwards and a filling mouth through which the second phase is moved forward.

To arrange that the first phase and the second phase present in the pack are inhomogeneously combined, a number of different approaches can be followed. For example, first a layer of one of the two components can be poured into the container that is to serve as pack and then the other component can be poured on top. If so desired a series of alternating layers can be applied. If the two phases have different colours and the container is transparent, e.g. a transparent plastic tub or a glass jar, then the alternating layers can be seen by their different colours from the outside.

Alternatively, controlled amounts of the first phase and the second phase can be pumped in a small holding vessel just before the filling head of the packing line. Only very slow stirring or no stirring at all is applied in the holding vessel to ensure that the product in the pack still contains the two components in an inhomogeneous combination. The holding vessel can also be omitted, and the two component streams can be combined in a short common pipe just before the filling head. In such embodiments, to prevent the components from becoming homogeneously combined, preferably the components are cooled down, e.g. to below 40°C, before they are fed to the holding vessel or common pipe.

To ensure the microbiological quality of the product, the production line downstream of the production of the first phase and the second phase, should preferably be aseptic.

Preferably however, to obtain troublefree production, and product of consistent and high quality, the first phase and the second phase are each filled through one or more filling mouths into a container, the filling rates being controlled such that the product comprises 10 to 95 wt% of the first phase and 5 to 90 wt% of the second phase. Preferably the first phase and the second phase are filled simultaneously into the container. In this way, if the two components have different colours, the surface of the product, after opening the container, shows the different colours. This can be visually attractive. This embodiment of simultaneous filling also makes it easy for the consumer to take product from both a region consisting predominantly of the first phase and a region consisting predominantly of the second phase.

As is described in more detail below, the product can for example be filled into a container using a nozzle with an even number of filling mouths in a circular arrangement. By filling the first phase and the second phase simultaneously, with the second phase being filled through filling mouths adjacent to those through which the first phase is filled, for example a packed product can be obtained in which the first phase and the second phase are present in alternating regions, resembling the shape of a grape-fruit or of a small cake divided in wedges.

In particular we found it to work well to use for filling the components into the pack a single nozzle construction that contains both a filling mouth through which the first phase is filled and filling mouth through which the second phase is filled. For example to obtain the grapefruit-like pattern described above, suitably a cylindrical pipe having fitted therein a piece, e.g. of teflon, with a starlike cross-section, which creates e.g. 6 or 8 channels in a circular arrangement for product to pass through, can be used. The connections between the channels and the supply of the second phase and the first phase are made such that if the first phase is fed to a particular channel, the second phase is fed to the two adjacent channels, and next to these, the first phase is fed, etc.

Attractive patterns can also be obtained by moving the container and the filling mouths relative to each other during the filling. For example, with rotation, spiral like patterns of the first phase and the second phase can be made in the pack. Another attractive way of filling the product in the container, is for the first phase and the second phase to constitute a yin yang symbol. Other patterns can of course be employed as well. Making the nozzles and other filling equipment to create such patterns is well within the abilities of the skilled person.

### Examples:

### Example 1: Meat phase

A meat phase with the following ingredients was made:

| ingredient | wt% |
|---|---|
| pork meat | 47.596 |
| pork liver | 28.282 |
| bacon | 8.105 |
| tomato puree | 7.517 |
| milk protein | 2.501 |
| glucose | 0.936 |
| salt | 0.137 |
| Aromaextract | 0.057 |
| Sodium nitrite | 0.001 |
| | |
| ***Water*** | 4.638 |

The meat was mixed with bacon and the other ingredients except the liver and chopped for about 3 minutes.
This mixture was heated at 72°C for 2 minutes after which the mixture was cooled to about 65°C. Then chopped pork liver was added and the liver together with the meat/bacon mix was microemulsified with a chopper. This was then heated a second time at 72°C for 5 minutes after which the mix was cooled and milk protein was added.

### Example 2: cream cheese phase

A second phase was made by mixing the following ingredients:

| ingredient | wt% |
|---|---|
| Creme fraiche (30 wt% fat pH 4.7) | 50.8 |
| fresh cheese | 47.8 |
| locust bean gum | 0.3 |
| salt | 0.05 |

The creme fraiche and the cheese are mixed together after which the thickener is added. The mixture is then heated to 72°C for 1 minute and homogenised at 200 bar.

### Example 3: Cream cheese pate twister:

33.3 wt% of the cream cheese phase of example 2 with 66.7 wt% of the meat phase of example 1 were combined to form a twister like pattern.
No colour exchange was visible after 40 days. Nor was any jelly separation or emulsion breakage visible.

### Example 4: Red Pesto phase:

| Ingredients | wt% |
|---|---|
| sundried tomatoes | 41.9 |
| water | 32.01 |
| olive oil | 9 |
| Tomato puree | 7.5 |
| sugar | 3 |
| salt | 2.15 |
| starch | 1.2 |
| spices | 2.44 |
| aroma | 0.3 |
| locust bean gum | 0.3 |
| lactic acid | 0.2 |

All the ingredients were mixed, heated to 95 °C and cooled until filling.

### Example 5: Red pesto paté twister

25 wt% of the red pesto phase of example 4 was filled up together with 75 wt% of the meat phase of example 1 in a twister like manner. The product was stable for 40 days. No colour exchange was visible. Nor was any jelly separation or emulsion breakage visible.

## Claims

1. Patterned spread comprising at least a first phase and at least a second phase, wherein the first phase comprises meat and the second phase is essentially meat free wherein the first phase comprises 10 to 90 wt% of meat, 0 to 30 wt% of bacon, 5 to 50 wt% of liver, 1 to 5 wt% added protein, having a pH of 4.0 to 7.5.

2. Spread according to claim 1 wherein the first phase comprises tocopherols in an amount of 0.001 to 1 wt%

3. Spread according to claim 1 or 2 wherein the second phase is selected from the group consisting of cream cheese, dairy cream, dairy spread, dairy cream alternative, dairy spread alternative, herbs, vegetables, fruit, soy, honey, chocolate, ice cream, yoghurt.

4. Spread according to claim 3 wherein the second phase is selected from the group of cream cheese, pesto, red pesto, creme fraiche.

5. Process for the manufacture of the first phase suitable for a patterned spread according to claim 1 comprising
a) mixing bacon or bacon substitute and meat and other ingredients except for the liver
b) heating to a temperature of at least 70°C for at least 2 minutes
c) adding liver
d) cooling the mix to less than 60°C
e) heating to a temperature of at least 72°C for at least 5 minutes
f) cooling to below 70°C
g) optionally micro-emulsifying
**characterised in that** protein is added.

6. Process according to claim 5 wherein the protein is added during the cooling step f).

7. Process according to claim 5 wherein the protein is added after the second heating step e).

8. Process according to any of claim 5 to 7 wherein tocopherol is added before step b).

9. Process according to any of claim 5 to 7 wherein tocopherol is added after cooling step f).

10. Process according to any of claim 5 to 9 wherein in step f) cooling is below 65°C.

11. Process according to any of claim 5 to 10 wherein the first phase is acidified.

12. Process according to claim 11 wherein the first phase is acidified before step b).

13. Process according to claim 11 wherein the first phase is acidified before heating step e).

14. Process for the manufacture of a patterned spread according to claim 1 comprising filling the first and second phase at a temperature of between 65 to 80°C.

15. Process for the manufacture of a patterned spread according to claim 1 wherein the first and second phase are filled at a temperature of between 25 to 40°C under aseptic conditions.

16. Process according to claim 94 or 15 wherein a single nozzle construction is used that comprises a filling mouth through which the first phase is filled and a filling mouth through which the second phase is filled.

## Patentansprüche

1. Gemusterter Aufstrich, der wenigstens eine erste Phase und wenigstens eine zweite Phase umfasst, wobei die erste Phase Fleisch umfasst und die zweite Phase im Wesentlichen fleischfrei ist, wobei die erste Phase 10 bis 90 Gew.-% Fleisch, 0 bis 30 Gew.-% Schinken, 5 bis 50 Gew.-% Leber, 1 bis 5 Gew.-% zugesetztes Protein umfasst, einen pH von 4,0 bis 7,5 hat.

2. Aufstrich nach Anspruch 1, wobei die erste Phase Tocopherole in einer Menge von 0,001 bis 1 Gew.-% umfasst.

3. Aufstrich nach Anspruch 1 oder 2, wobei die zweite Phase ausgewählt ist aus der Gruppe, bestehend aus Rahmkäse, Sahne, Aufstrich auf Milchbasis, Sahnealternative, Alternative für Aufstrich auf Milchbasis, Kräutern, Gemüse, Früchten, Soja, Honig, Schokolade, Speiseeis, Yoghurt.

4. Aufstrich nach Anspruch 3, wobei die zweite Phase ausgewählt ist aus der Gruppe, bestehend aus Rahmkäse, Pesto, rotes Pesto, Creme fraiche.

5. Verfahren für die Herstellung der ersten Phase, die für einen gemusterten Aufstrich nach Anspruch 1 geeignet ist, umfassend
a) Mischen von Schinken oder Schinkenersatz und Fleisch und anderen Ingredienzien außer der Leber,
b) Erwärmen auf eine Temperatur von wenigstens 70 °C für wenigstens 2 Minuten,
c) Zusetzen von Leber,
d) Kühlen der Mischung auf wenigster als 60 °C,
e) Erwärmen auf eine Temperatur von wenigstens 72 °C für wenigstens 5 Minuten,
f) Kühlen auf unter 70 °C,
g) gegebenenfalls Mikro-Emulgieren,
**dadurch gekennzeichnet, dass** Protein zugesetzt wird.

6. Verfahren nach Anspruch 5, wobei das Protein während des Kühlungsschritts f) zugesetzt wird.

7. Verfahren nach Anspruch 5, wobei das Protein nach dem zweiten Erwärmungsschritt e) zugesetzt wird.

8. Verfahren nach einem der Ansprüche 5 bis 7, wobei Tocopherol vor Schritt b) zugesetzt wird.

9. Verfahren nach einem der Ansprüche 5 bis 7, wobei Tocopherol nach Kühlungsschritt f) zugesetzt wird.

10. Verfahren nach einem der Ansprüche 5 bis 9, wobei in Schritt f) das Kühlen unter 65 °C ist.

11. Verfahren nach einem der Ansprüche 5 bis 10, wobei die erste Phase angesäuert wird.

12. Verfahren nach Anspruch 11, wobei die erste Phase vor Schritt b) angesäuert wird.

13. Verfahren nach Anspruch 11, wobei die erste Phase vor dem Erwärmungsschritt e) angesäuert wird.

14. Verfahren für die Herstellung eines gemusterten Aufstrichs nach Anspruch 1, umfassend Abfüllen der ersten und zweiten Phase bei einer Temperatur zwischen 65 und 80 °C.

15. Verfahren für die Herstellung eines gemusterten Aufstrichs nach Anspruch 1, wobei die erste und zweite Phase bei einer Temperatur zwischen 25 und 40 °C unter aseptischen Bedingungen abgefüllt werden.

16. Verfahren nach Anspruch 14 oder 15, wobei eine Einzeidüsenkonstruktion verwendet wird, die eine Abfüllöffnung, durch die die erste Phase abgefüllt wird, und eine Abfüttöffnung, durch die die zweite Phase abgefüllt wird, umfasst.

## Revendications

1. Produit à tartiner à motif comprenant au moins une première phase et au moins une seconde phase, dans lequel la première phase comprend de la viande et la seconde phase est essentiellement dépourvue de viande, la première phase comprenant de 10 à 90 % de viande, de 0 à 30 % de bacon, de 5 à 50 % de foie, de 1 à 5 % de protéine ajoutée, et ayant un pH de 4,0 à 7,5.

2. Produit à tartiner selon la revendication 1, dans lequel la première phase comprend des tocophérols en une quantité de 0,001 à 1 % en poids.

3. Produit à tartiner selon la revendication 1 ou 2, dans lequel la seconde phase est choisie dans le groupe constitué du fromage à la crème, de la crème laitière, d'un produit laitier à tartiner, d'un substitut de crème laitière, d'un substitut de produit laitier à tartiner, d'herbes, de légumes, de fruits, de soja, de miel, de chocolat, de glace et de yogourt.

4. Produit à tartiner selon la revendication 3, dans lequel la seconde phase est choisie dans le groupe constitué du fromage à la crème, du pesto, du pesto rouge, de crème fraîche.

5. Procédé de fabrication de la première phase utilisable pour un produit à tartiner à motif selon la revendication 1, comprenant les étapes consistant à :
a) mélanger le bacon ou le substitut de bacon avec la viande et les autres ingrédients, exception faite du foie
b) chauffer à une température d'au moins 70 % pendant au moins 2 minutes
c) ajouter le foie
d) refroidir le mélange à moins de 60°C
e) chauffer à une température d'au moins 72°C pendant au moins 5 minutes
f) refroidir au-dessous de 70°C
g) éventuellement, micro-émulsifier
**caractérisé en ce qu'**une protéine est ajoutée.

6. Procédé selon la revendication 5, dans lequel la protéine est ajoutée pendant l'étape de refroidissement f).

7. Procédé selon la revendication 5, dans lequel la protéine est ajoutée après la seconde étape de chauffage e).

8. Procédé selon l'une quelconque des revendications 5 à 7, dans lequel le tocophérol est ajouté avant l'étape b).

9. Procédé selon l'une quelconque des revendications 5 à 7, dans lequel le tocophérol ajouté après l'étape de refroidissement f).

10. Procédé selon l'une quelconque des revendications 5 à 9, dans lequel, dans l'étape f), le refroidissement est au-dessous de 65°C.

11. Procédé selon l'une quelconque des revendications 5 à 10, dans lequel la première phase est acidifiée.

12. Procédé selon la revendication 11, dans lequel la première phase est acidifiée avant l'étape b).

13. Procédé selon la revendication 11, dans lequel la première phase est acidifiée avant l'étape de chauffage e).

14. Procédé de fabrication d'un produit à tartiner à motif selon la revendication 1 comprenant l'étape consistant à injecter les première et seconde phases à une température comprise entre 65 et 80°C.

15. Procédé de fabrication d'un produit à tartiner à motif selon la revendication 1 comprenant l'étape consistant à injecter les première et seconde phases à une température comprise entre 25 et 40°C dans des conditions aseptiques.

16. Procédé selon la revendication 14 ou 15, dans lequel on utilise une installation à une seule buse qui comprend un orifice de remplissage, par lequel la première phase est injectée et un orifice de remplissage par lequel la seconde phase est injectée.
